# EUROPEAN PATENT APPLICATION

(11) **EP 2 790 360 A1**
(43) Date of publication of application: **15.10.2014**
(21) Application number: 12865121.3
(22) Date of filing: 29.06.2012
(51) Int. Cl.: H04L 12/70

(54) **ETHERNET FLOW CONTROL DEVICE AND METHOD BASED ON MICROWAVE TRANSMISSION**

(30) Priority: 09.01.2012 CN 201210004629
(71) Applicant: ZTE Corporation, Shenzhen, Guangdong 518057 (CN)
(72) Inventor: LIN, Xiaojing, Shenzhen Guangdong 518057 (CN); SHEN, Shaoqing, Shenzhen Guangdong 518057 (CN); ZHAO, Yueheng, Shenzhen Guangdong 518057 (CN); CHENG, Wen, Shenzhen Guangdong 518057 (CN); XUE, Juwei, Shenzhen Guangdong 518057 (CN)
(74) Representative: Petraz, Gilberto Luigi
(86) International application number: PCT/CN2012/077853
(87) International publication number: WO 2013/104178

(57) **Abstract**

An Ethernet flow control method and apparatus based on microwave transmission are provided. The method includes: detecting Adaptive Coding and Modulation (ACM) information of a wireless link in real time, and generating a rate-limit frame and transmitting the rate-limit frame to a data transmitting end when a change of the ACM causes a change of an Ethernet bandwidth; and monitoring a change of a buffer level in real time while detecting the ACM information, generating a pause frame and transmitting the pause frame to the data transmitting end when the buffer level rises to a highest threshold, and generating a resume frame and transmitting the resume frame to the data transmitting end when the buffer level drops to a lowest threshold.

## Description

### Technical Field

The present invention relates to the field of microwave data communication technologies, and in particular, to an Ethernet flow control apparatus and method based on microwave transmission.

### Background of the Related Art

The Ethernet is the most widely used local area network technology currently. Due to its characteristics such as simplicity, low cost, strong extensibility and good combination with an IP network and so on, the application of the Ethernet technology is moving from the intranet to the public telecommunication network field. Ethernet access refers to combining the Ethernet technology with the integrated wiring, as an access network to a public telecommunication network, it directly provides the user with multiple IP based service channels. The essence of the Ethernet is a dual-layer medium access control technology, and the Ethernet can be transmitted on five types of lines, and it can also be combined with other access media, to form multiple broadband access technologies.

With the rapid development of the Internet and the IP-based next generation network, the IP network has become multi-service broadband information communication network infrastructure, and various communication applications including voice and video are transmitted in the network in a form of IP data packets. The transmission of the IP network is performed by using the Ethernet technology.

In a traditional IP network, all messages are treated equally without difference, and each forwarding device processes all messages using a First In First Out (FIFO) policy, and transmits the messages to a destination with best effort, but it does not provide any guarantee on performances such as the reliability of the message transmission, transmission delay etc. Network develops rapidly, and with the continuous emergence of new applications in the IP network, new requirements are put on the quality of service of the IP network. For example, real-time services, such as VoIP, put higher requirements on the delay of the message transmission, and if the delay of the message transmission is too long, the user can not accept it (by contrast, the E-Mail and FTP services are not sensitive to the delay of time). In order to support services, such as voice, video and data and so on, with different service requirements, the network is required to be able to distinguish different communications, thus providing corresponding services to the communications. The emergence of the QoS technology is dedicated to solve this problem.

The Ethernet is in the face of new problems when the transmission is based on such a particular medium as microwave. The microwave transmission belongs to wireless communications, and it is influenced by the external environment such as weather in the wireless communication system. Wireless fading channels have time-varying characteristics, which results in a lot of uncertainty in a process of communications. In order to deal with such uncertainty, the Adaptive Coding and Modulation (ACM) technology is widely applied in the microwave transmission. A basic principle of the ACM technology is that when the channel state changes, a transmitting end keeps the transmission power unchanged, and adaptively changes the modulation and coding mode with the channel state, so as to achieve maximum throughput in different channel states. The system throughput is very high when the channel is in a higher signal-to-noise ratio, but when the channel is in a lower signal-to-noise ratio, communication can not be performed normally. With the adaptive modulation and coding technology, a compromise is well made between the reliability and stability of the communication and the throughout of the system, which solves the contradiction therebetween successfully.

Based on the characteristics of real-time change of the system throughput of the microwave transmission, the Ethernet puts higher requirements on performances such as the reliability of message transmission, transmission delay, jitter during transmission etc. The traditional adaptive wireless link throughput adjustment method is to adopt a mode of using a backpressure pause frame. For a downstream device, when a buffer level of the device increasingly rise to a certain high threshold due to an outlet rate less than an inlet rate, the downstream device transmits a pause frame to an upstream device, and after the upstream device receives the pause frame, the upstream device stops transmitting messages to the downstream device. When the buffer level of the downstream device drops to be lower than a low threshold, the downstream device transmits a resume frame, to notify the upstream device that the messages can continue to be transmitted. Such method well solves the problem of transmission reliability, but the performances of delay and delay jitter of high priority services can not be ensured at all, and may be influenced greatly.

### Summary of the Invention

The technical problem to be solved by the embodiments of the present invention is to provide an Ethernet flow control apparatus and method based on microwave transmission, which can ensure the delay of high priority services.

In order to solve the above technical problem, the embodiments of the present invention provide an Ethernet flow control method based on microwave transmission, comprising:
detecting ACM information of a wireless link in real time, and generating a rate-limit frame and transmitting the rate-limit frame to a data transmitting end when a change of the ACM causes a change of an Ethernet bandwidth; and
monitoring a change of a buffer level in real time while detecting the ACM information, generating a pause frame and transmitting the pause frame to the data transmitting end when the buffer level rises to a highest threshold, and generating a resume frame and transmitting the resume frame to the data transmitting end when the buffer level drops to a lowest threshold.

Alternatively, the ACM information is used to indicate the modulation and coding mode of a frame after a current frame, and each modulation and coding mode corresponds to an Ethernet bandwidth.

Alternatively, generating a rate-limit frame and transmitting the rate-limit frame to a data transmitting end when a change of the ACM causes a change of an Ethernet bandwidth comprises:
when determining that the change of the ACM causes the change of the Ethernet bandwidth, searching for corresponding newest Ethernet bandwidth information according to a newest ACM, generating the rate-limit frame carrying the newest Ethernet bandwidth information and transmitting the rate-limit frame to the data transmitting end, so that the data transmitting end changes a data transmission rate.

Alternatively, the rate-limit frame includes a destination address, a source address, length information, a port rate, a pad, and a frame check sequence.

Alternatively, the data transmitting end is a switch chip.

In order to solve the above technical problem, the embodiments of the present invention provide an Ethernet flow control apparatus based on microwave transmission, comprising: an ACM real-time detection module, a rate-limit frame generation module, a transmission buffer real-time monitoring module, a pause frame generation module and a scheduling module, wherein,
the ACM real-time detection module is configured to detect ACM information of a wireless link in real time, and trigger the rate-limit frame generation module when determining that a change of the ACM causes a change of an Ethernet bandwidth;
the rate-limit frame generation module is configured to generate a rate-limit frame based on the trigger from the ACM real-time detection module and transmit the rate-limit frame to the scheduling module;
the transmission buffer real-time monitoring module is configured to monitor a change of a buffer level in real time while the ACM real-time detection module detects the ACM information of the wireless link in real time, trigger the pause frame generation module to generate a pause frame when the buffer level rises to a highest threshold and trigger the pause frame generation module to generate a resume frame when the buffer level drops to a lowest threshold;
the pause frame generation module is configured to generate the pause frame or generate the resume frame based on the trigger from the transmission buffer real-time monitoring module, and transmit the generated frame to the scheduling module; and
the scheduling module is configured to transmit the rate-limit frame generated by the rate-limit frame generation module to the data transmitting end, transmit the pause frame generated by the pause frame generation module to the data transmitting end and transmit the resume frame generated by the pause frame generation module to the data transmitting end.

Alternatively, the ACM real-time detection module is configured to trigger the rate-limit frame generation module in a following way:
searching for corresponding newest Ethernet bandwidth information according to a newest ACM, and notifying the newest Ethernet bandwidth information to the rate-limit frame generation module.

Alternatively, the rate-limit frame generated by the rate-limit frame generation module carries the newest Ethernet bandwidth information.

Alternatively, the rate-limit frame includes a destination address, a source address, length information, a port rate, a pad, and a frame check sequence.

Alternatively, the scheduling module is configured to transmit the received frame in a following way:
inserting the received frame in a received service flow, and transmitting the received service flow to the data transmitting end.

The method and apparatus according to the embodiments of the present invention adaptively adjust the transmission rate by means of a combination of the flow-control and the rate-limit of the outlet, and when the wireless link causes a change of Ethernet transmission bandwidth due to the ACM, ACM switch parameters are fed back in real time, and the rate limit of the port is notified to the data transmitting end by means of transmitting a control frame to the data transmitting end, and when the rate limit can not follow the change of bandwidth of the wireless link, the flow-control mechanism is enabled to avoid discarding messages due to overflow of the buffer, so that during the microwave transmission of the Ethernet services, the correctness and reliability of the link data transmission can be ensured and the delay jitter of the high priority services during congestion is reduced to the maximum extent, thus improving the performance.

### Brief Description of Drawings

Fig. 1 is a flowchart of embodiment one of the present invention;
Fig. 2 is a structural diagram of an apparatus according to embodiment two of the present invention;
Fig. 3 is a flowchart of an application example one of the present invention;
Fig. 4 is a diagram of a rate-limit frame format;
Fig. 5 is a flowchart of an application example two of the present invention;
Fig. 6 is a diagram of a buffer state change of the application example two of the present invention;
Fig. 7 is a flowchart of an application example three of the present invention; and
Fig. 8 is a diagram of a buffer state change of the application example three of the present invention.

### Preferred Embodiments of the Present Invention

The embodiments of the present invention will be described in detail hereinafter in conjunction with accompanying drawings. It should be illustrated that, in the case of no conflict, the embodiments of this application and the features in the embodiments could be combined randomly with each other.

### Embodiment one

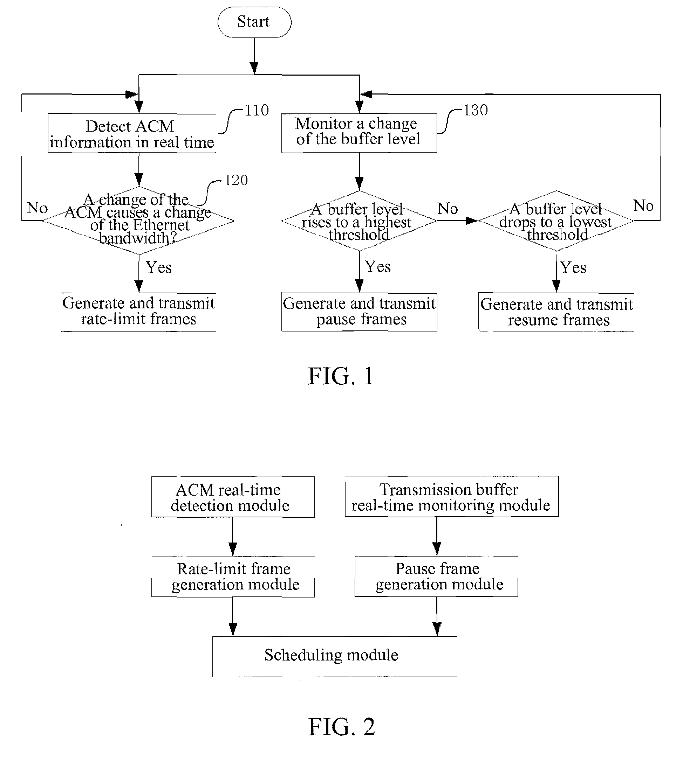

As shown in Fig. 1, a flow control method according to the present embodiment comprises the following steps.

In step 110, ACM information of a wireless link is detected in real time;

The above ACM information is a signal with a number of bits (for example, 4 bits), and it is provided by a modem chip to indicate the modulation and coding mode of a frame after a current frame.

In step 120, when a change of the ACM causes a change of an Ethernet bandwidth of a wireless link, a rate-limit frame is generated to be transmitted to a data transmitting end;

There is a corresponding relationship between the above ACM information and the bandwidth of the wireless link, as shown in table 1. When the change of the ACM causes the change of the bandwidth of the wireless link, the generated rate-limit frame carrying newest wireless link bandwidth information is transmitted to the data transmitting end, and the data transmitting end configures a new transmission rate. The data transmitting end can be a switch chip.

**Table 1 Corresponding table between the ACM information and the Ethernet bandwidth**

| ACM information (4 bits) | Ethernet bandwidth (bps) |
|---|---|
| 0x0 | Bandwidth 0 |
| 0x1 | Bandwidth 1 |
| 0x2 | Bandwidth 2 |
| 0x3 | Bandwidth 3 |
| 0x4 | Bandwidth 4 |
| 0x5 | Bandwidth 5 |
| 0x6 | Bandwidth 6 |
| 0x7 | Bandwidth 7 |
| 0x8 | Bandwidth 8 |
| 0x9 | Bandwidth 9 |
| 0xA | Bandwidth 10 |
| 0xB | Bandwidth 11 |
| 0xC | Bandwidth 12 |
| 0xD | Bandwidth 13 |
| 0xE | Bandwidth 14 |
| 0xF | Bandwidth 15 |

Each operating mode of the data receiving end (for example, the modem chip) corresponds to 1 to 16 modulation and coding modes. Under each modulation and coding mode, there is a corresponding Ethernet bandwidth of the wireless link. That is, each modulation and coding mode corresponds to one Ethernet bandwidth. The Ethernet bandwidth in the table includes bandwidths occupied by the Ethernet corresponding to the wireless link under various modulation modes corresponding to the operating modes of the currently used modem chip. The Ethernet bandwidth configured in the table is generally 99.5% of the actual bandwidth of the wireless link. When the operating mode of the modem chip is reconfigured, the table is changed to a relationship table between the ACM information and the Ethernet bandwidth under the newest operating mode.

The generated rate-limit frame includes a destination address, a source address, length information, a port rate, a pad, and a frame check sequence.

In step 130, a change of a buffer level is monitored in real time while detecting the ACM information, and a pause frame is generated to be transmitted to the data transmitting end when the buffer level rises to a highest threshold, and a resume frame is generated to be transmitted to the data transmitting end when the buffer level drops to a lowest threshold.

The generated pause frame or resume frame is transmitted to the data transmitting end, and the data transmitting end performs a corresponding flow-control operation.

### Embodiment two

The present embodiment describes a flow-control apparatus for implementing the above method according to embodiment one. As shown in Fig. 2, the pause apparatus comprises an ACM real-time detection module, a rate-limit frame generation module, a transmission buffer real-time monitoring module, a pause frame generation module and a scheduling module, wherein,
the ACM real-time detection module is configured to detect ACM information of a wireless link in real time, and trigger the rate-limit frame generation module when determining that the change of the ACM causes the change of the Ethernet bandwidth; and
the rate-limit frame generation module is configured to generate a rate-limit frame based on the trigger from the ACM real-time detection module and transmit the rate-limit frame to the scheduling module;
the transmission buffer real-time monitoring module is configured to monitor a change of a buffer level in real time while the ACM real-time detection module detects the ACM information of the wireless link in real time, trigger the pause frame generation module to generate a pause frame when the buffer level rises to a highest threshold, and trigger the pause frame generation module to generate a resume frame when the buffer level drops to a lowest threshold;
the pause frame generation module is configured to generate the pause frame or generate the resume frame based on the trigger from the transmission buffer real-time monitoring module, and transmit the generated frame to the scheduling module; and
the scheduling module is configured to transmit the rate-limit frame generated by the rate-limit frame generation module to the data transmitting end, transmit the pause frame generated by the pause frame generation module to the data transmitting end, and transmit the resume frame generated by the pause frame generation module to the data transmitting end.

Specifically, the above ACM real-time detection module is configured to trigger the rate-limit frame generation module in a following way: the ACM real-time detection module searching for corresponding newest Ethernet bandwidth information according to a newest ACM, and notifying the newest Ethernet bandwidth information to the rate-limit frame generation module. The rate-limit frame generation module carries the bandwidth information in the generated rate-limit frame.

Preferably, the data transmitting end is a switch chip, the current receiving end is a modem chip, and the transmission buffer real-time monitoring module monitors a buffer level in a transmission direction of the Ethernet. Both the above ACM real-time detection module and the transmission buffer real-time monitoring module can be implemented by the FPGA on a modem plate.

Specifically, the scheduling module is configured to insert the pause frame, the resume frame and the rate-limit frame in a received service flow, and transmit the received service flow to the data transmitting end. The data transmitting end identifies and analyzes the rate-limit frame, and configures the port rate of the transmitting end according to the parameters obtained by analyzing the rate-limit frame. The data transmitting end identifies and analyzes the pause frame or the resume frame, and stops transmitting data to the current data receiving end according to the received pause frame, and starts to transmit data to the current data receiving end according to the received resume frame.

The flow-control method according to embodiment one will be described below through several application examples.

### Application example one

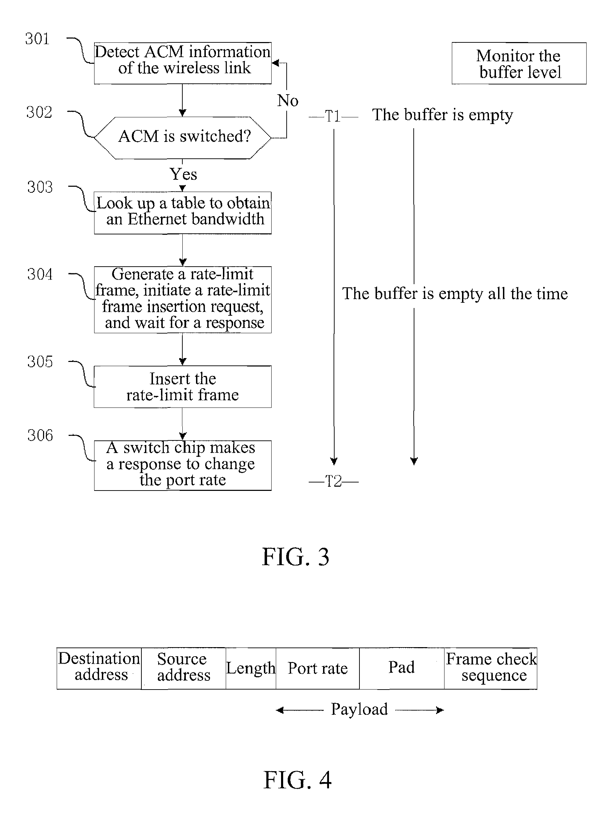

In the present example, the ACM is switched from a low modulation mode to a high modulation mode, and an Ethernet bandwidth of the wireless link becomes larger. The implementation steps are as shown in Fig. 3.

In step 301, an ACM real-time detection module detects ACM information of a wireless link in real time. As the ACM information indicates a modulation mode of the wireless link after a frame, the ACM real-time detection module can analyze the detected ACM information, compares it with the current modulation mode of the wireless link, and obtain information on when the ACM is switched and which modulation mode the ACM is to be switched to;
in step 302, the ACM real-time detection module compares the currently received ACM information with the ACM information received last time, and if they are different and the current ACM value is greater than the last ACM value, it is determined that the ACM is switched and the switch direction is from the low modulation mode to the high modulation mode, and the Ethernet bandwidth of the wireless link becomes larger, and if they are the same, it is determined that the ACM is not switched, and the ACM real-time detection module continues to perform detection;

In step 303, after determining that the ACM is switched, the ACM real-time detection module looks up the table by addressing with the current ACM information, to obtain the Ethernet transmission bandwidth of the wireless link. The format of the table is as shown in table 1.

In step 304, after obtaining the Ethernet bandwidth parameters, the ACM real-time detection module triggers the rate-limit frame generation module to generate a rate-limit frame. The frame can be in a format illustrated in Fig. 4, including a Destination Address (DA), a Source Address (SA), a length, a port rate, a pad and a Frame Check Sequence (FCS), wherein, the port rate and the pad constitute a payload. At the same time, the rate-limit frame generation module transmits a frame insertion request to the scheduling module and waits for a response from the scheduling module.

In step 305, after receiving the insertion request from the rate-limit frame generation module, the scheduling module inserts a rate-limit frame after the current transmission of the data frames is completed, and clears the request signal at the same time.

In step 306, after receiving the rate-limit frame, the switch chip of the upstream device makes a response to reduce the port transmission rate.

Assume that the buffer FIFO is empty in the transmission direction before the ACM is switched, and then in the whole flow from T1 to T2 in Fig. 3, the buffer FIFO is always empty. Therefore, in such case, the transmission buffer real-time monitoring module monitors the level condition of buffer all the time, however, as the level does not change, the flow-control mechanism will not be started.

### Application example two

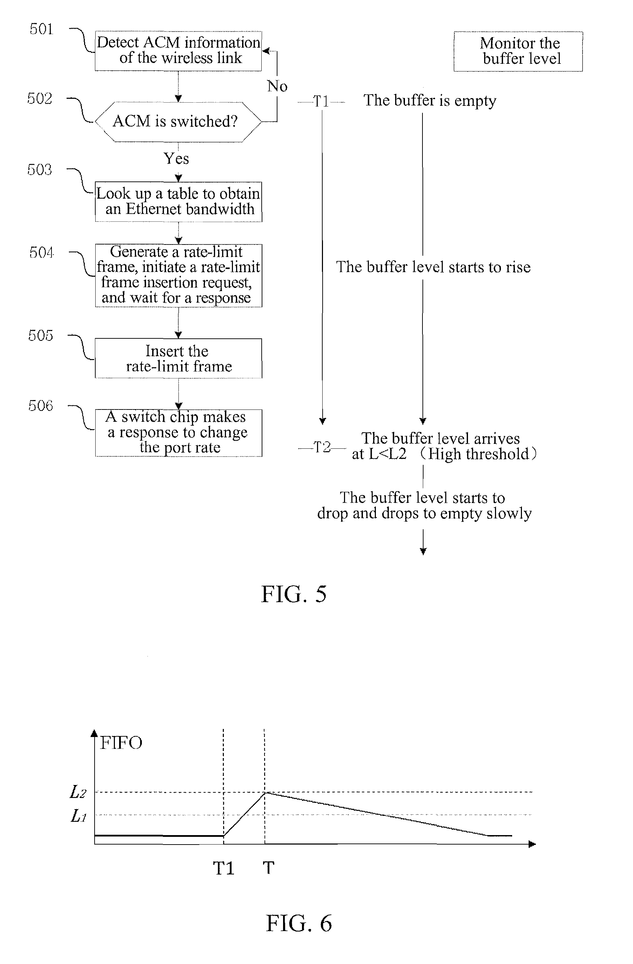

In the present example, the ACM is switched from a high modulation mode to a low modulation mode, and an Ethernet bandwidth of the wireless link becomes smaller, but amplitude of variation is small. The implementation steps are shown in Fig. 5.

The implementation steps 501 and 503-506 in the present example are basically the same as steps 301 and 303-306 in example one, and the difference lies in step 502. The step 502 in the present example is that the ACM real-time detection module compares the currently received ACM information with the ACM information received last time, and if they are different and the current ACM value is less than the last ACM value, it is determined that the ACM is switched and the switch direction is from the high modulation mode to the low modulation mode, and the Ethernet bandwidth of the wireless link becomes smaller, and if they are the same, it is determined that the ACM is not switched, and the ACM real-time detection module continues to perform detection.

The primary difference between example two and example one is the change of the buffer FIFO level, as shown in Fig. 6. Assume that before the ACM is switched, the buffer FIFO in the transmission direction is empty, at the time of T1, the ACM is switched from the high modulation mode to the low modulation mode, and the Ethernet bandwidth of the wireless link becomes smaller, but the switch chip in the upstream still transmits data at a rate matched with the bandwidth before the change, and the outlet rate of the buffer is less than the inlet rate, which results in a rise of the buffer level. At the time of T2, the buffer level rises to a level L, but the flow-control mechanism will not be started as L does not reach to a preset high threshold L2 for transmitting the flow-control frame. After the time of T2, the switch chip makes a response after receiving the rate-limit frame, so as to reduce the port transmission rate to 99.5% of the wireless link rate, and therefore, the buffer level drops slowly again until it is empty.

### Application example three

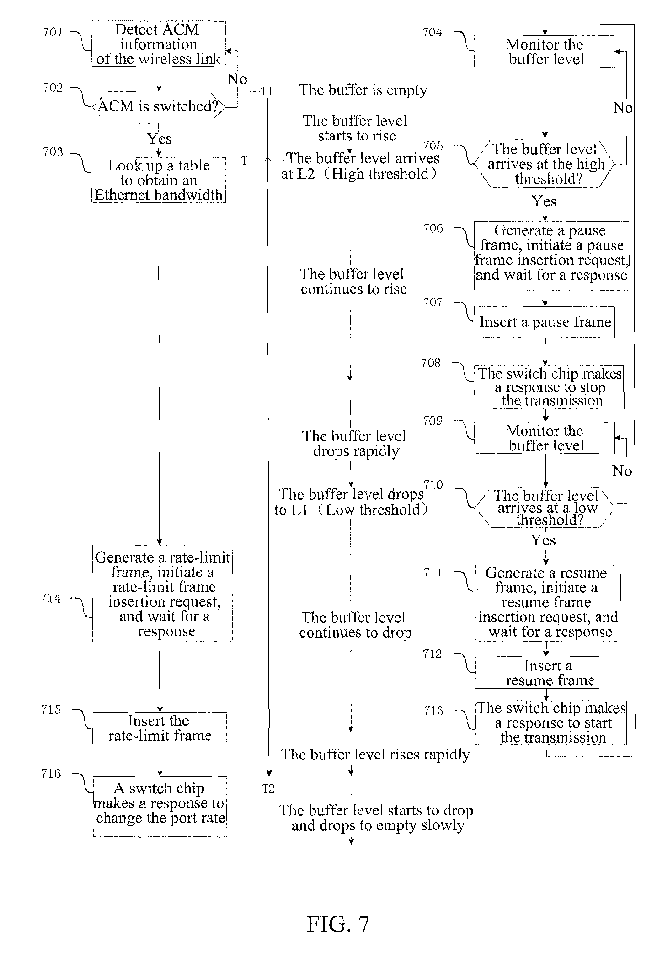

In the present example, the ACM is switched from a high modulation mode to a low modulation mode, and an Ethernet bandwidth of the wireless link becomes smaller, but amplitude of variation is large. The implementation steps are shown in Fig. 7.

The steps of the rate-limit mechanism in the present example are the same as those in example two.

In step 701, an ACM real-time detection module detects ACM information of a wireless link in real time.

In step 702, the currently received ACM information is compared with the ACM information received last time, and if they are different, it is determined that the ACM is switched, and if they are the same, it is determined that the ACM is not switched, and the ACM real-time detection module continues to perform detection.

In step 703, after determining that the ACM is switched, the table is looked up by addressing with the current ACM information, to obtain the Ethernet transmission bandwidth of the wireless link.

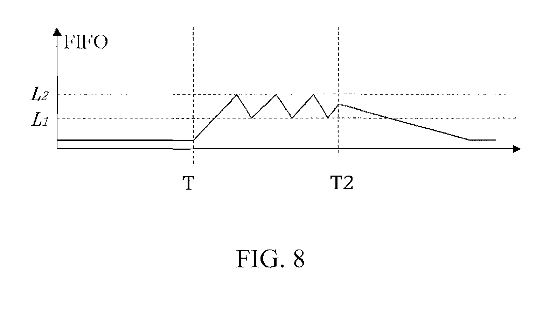

After the ACM is switched, at the time of T1, the ACM is switched from the high modulation mode to the low modulation mode, and the Ethernet bandwidth of the wireless link becomes smaller, but the switch chip in the upstream still transmits data at a rate matched with the bandwidth before the change, and the outlet rate of the buffer is less than the inlet rate, which results in a rise of the buffer level. Until the time of T, the level rises to a high threshold L2 (as shown in Fig. 8), and then the flow-control mechanism starts to play a role. Therefore, the flow-control mechanism and the rate-limit mechanism start to work and they work separately. Firstly, the flow-control mechanism will be described.

In step 704, the transmission buffer real-time monitoring module monitors the level of buffer FIFO;
in step 705, the level of buffer FIFO L is compared with the size of the set high threshold L2, and if L reaches to L2, step 706 is entered; and if L does not reach to L2, the comparison continues to be performed, waiting for the level to rise continuously;
in step 706, after L2 is reached, the pause frame generation module generates a pause frame, and at the same time, the pause frame generation module transmits a frame insertion request to the scheduling module, and waits for a response from the scheduling module; and
in step 707, after receiving the insertion request from the pause frame generation module, the scheduling module inserts a pause frame after the current transmission of the data frames is completed, and clears the request signal at the same time.

In step 708, after receiving the pause frame, the switch chip makes a response to stop the data transmission.

In the above steps 704 to 707, the level of buffer FIFO continues to rise. From step 708, as the source data stops to be transmitted, the buffer level drops rapidly.

In step 709, the level continues to be monitored;
in step 710, it is judged whether the buffer level drops to a low threshold L1, and if yes, step 711 is performed; if no, the level continues to be monitored, to wait for a continuous drop;
in step 711, after L1 is reached, the pause frame generation module generates a resume frame, and at the same time, the module transmits a frame insertion request to the scheduling module and waits for a response from the scheduling module;
in step 712, after receiving the insertion request from the resume frame generation module, the scheduling module inserts a resume frame after the current transmission of the data frames is completed, and clears the request signal at the same time.

In step 713, after receiving the resume frame, the switch chip makes a response to start the data transmission.

In steps 709 to 712, the level of buffer FIFO drops rapidly. From step 713, as the source data is transmitted again at a rate greater than the bandwidth of the wireless link, the buffer level starts to rise again.

Before the rate-limit mechanism functions, steps 704 to 713 loop continuously.

The rate-limit mechanism will be described blow.

In step 714, after obtaining the Ethernet bandwidth parameters, the rate-limit frame generation module generates a rate-limit frame, and at the same time, the module transmits a frame insertion request to the scheduling module, and waits for a response from the scheduling module.

In step 715, after receiving the insertion request from the rate-limit frame generation module, the scheduling module inserts a rate-limit frame after the current transmission of the data frames is completed, and clears the request signal at the same time.

In step 716, after receiving the rate-limit frame, the switch chip makes a response to reduce the port transmission rate.

As the rate-limit mechanism starts to the corresponding time of which the process is slower than that of the flow-control mechanism, the flow-control mechanism plays a role before the switch chip makes a response to the rate-limit frame, and the level of buffer FIFO vibrates between L1 and L2, and when the switch chip makes a response to the rate limit, it solves the problem of mismatch between the inlet and the outlet fundamentally only after adjusting the transmission rate to a new rate matched with the wireless link, and the buffer level drops to be empty slowly.

The rate-limit mechanism and the flow-control mechanism are closely linked together through the buffer state, and function together, and the change of the buffer state of the whole flow is shown in Fig. 8.

In conclusion, in most of the time, the rate-limit mechanism plays a role, and only when the rate-limit can not make a response in time, the flow-control mechanism will play a role. Under the flow-control mechanism, once congestion of the wireless link occurs due to the switch of the ACM, high and low priority services are blocked, and although the high priority services can get a right to continue to be transmitted after the flow-control, the change of the delay is larger. While under the rate-limit mechanism, the high priority services always have a chance of transmission, and the change of the delay is small. This can ensure the correctness and reliability of the link data transmission and the delay jitter of the high priority services during congestion is reduced to the maximum extent, thus improving the performance.

A person having ordinary skill in the art can understand that all or a part of steps in the above method can be implemented by programs instructing related hardware, which can be stored in a computer readable storage medium, such as a read-only memory, a disk or a CD etc. Alternatively, all or a part of steps in the above embodiments can also be implemented by one or more integrated circuits. Accordingly, each module/unit in the above embodiments can be implemented in the form of hardware, or can also be implemented in the form of software functional module. The present invention is not limited to any particular form of a combination of hardware and software.

Of course, the present invention can have a plurality of other embodiments. Without departing from the spirit and substance of the present invention, those skilled in the art can make various corresponding changes and variations according to the present invention, and all these corresponding changes and variations should belong to the protection scope of the appended claims in the present invention.

### Industrial Applicability

The method and apparatus according to the embodiments of the present invention adaptively adjust the transmission rate by means of a combination of the flow-control and the rate-limit of the inlet and outlet, and when the wireless link causes a change of Ethernet transmission bandwidth due to the ACM, ACM switch parameters are fed back in real time, and the rate limit of the port is notified to the data transmitting end by means of transmitting a control frame to the data transmitting end, and when the rate limit can not follow the change of bandwidth of the wireless link, the flow-control mechanism is enabled to avoid discarding messages due to overflow of the buffer, so that during the microwave transmission of the Ethernet services, the correctness and reliability of the link data transmission can be ensured and the delay jitter of the high priority services during congestion is reduced to the maximum extent, thus improving the performance.

## Claims

1. An Ethernet flow control method based on microwave transmission, comprising:
detecting Adaptive Coding and Modulation (ACM) information of a wireless link in real time, and generating a rate-limit frame and transmitting the rate-limit frame to a data transmitting end when a change of the ACM causes a change of an Ethernet bandwidth; and
monitoring a change of a buffer level in real time while detecting the ACM information, generating a pause frame and transmitting the pause frame to the data transmitting end when the buffer level rises to a highest threshold, and generating a resume frame and transmitting the resume frame to the data transmitting end when the buffer level drops to a lowest threshold.

2. The method according to claim 1, wherein,
the ACM information is used to indicate a modulation and coding mode of a frame after a current frame, and each modulation and coding mode corresponds to an Ethernet bandwidth.

3. The method according to claim 1, wherein,
the step of generating a rate-limit frame and transmitting the rate-limit frame to a data transmitting end when a change of the ACM causes a change of an Ethernet bandwidth comprises:
when determining that the change of the ACM causes the change of the Ethernet bandwidth, searching for corresponding newest Ethernet bandwidth information according to a newest ACM, generating a rate-limit frame carrying the newest Ethernet bandwidth information and transmitting the rate-limit frame carrying the newest Ethernet bandwidth information to the data transmitting end, so that the data transmitting end changes a data transmission rate.

4. The method according to claim 1 or 2 or 3, wherein,
the rate-limit frame includes a destination address, a source address, length information, a port rate, a pad and a frame check sequence.

5. The method according to claim 1 or 2 or 3, wherein,
the data transmitting end is a switch chip.

6. An Ethernet flow control apparatus based on microwave transmission, comprising: an Adaptive Coding and Modulation (ACM) real-time detection module, a rate-limit frame generation module, a transmission buffer real-time monitoring module, a pause frame generation module and a scheduling module, wherein,
the ACM real-time detection module is configured to detect ACM information of a wireless link in real time, and trigger the rate-limit frame generation module when determining that a change of the ACM causes a change of an Ethernet bandwidth;
the rate-limit frame generation module is configured to generate a rate-limit frame based on the trigger from the ACM real-time detection module and transmit the rate-limit frame to the scheduling module;
the transmission buffer real-time monitoring module is configured to monitor a change of a buffer level in real time while the ACM real-time detection module detects the ACM information of the wireless link in real time, trigger the pause frame generation module to generate a pause frame when the buffer level rises to a highest threshold, and trigger the pause frame generation module to generate a resume frame when the buffer level drops to a lowest threshold;
the pause frame generation module is configured to generate the pause frame or generate the resume frame based on the trigger from the transmission buffer real-time monitoring module, and transmit the generated pause frame or resume frame to the scheduling module; and
the scheduling module is configured to transmit the rate-limit frame generated by the rate-limit frame generation module to a data transmitting end, transmit the pause frame generated by the pause frame generation module to the data transmitting end, and transmit the resume frame generated by the pause frame generation module to the data transmitting end.

7. The apparatus according to claim 6, wherein,
the ACM real-time detection module is configured to trigger the rate-limit frame generation module in a following way:
searching for corresponding newest Ethernet bandwidth information according to a newest ACM, and notifying the newest Ethernet bandwidth information to the rate-limit frame generation module.

8. The apparatus according to claim 7, wherein,
the rate-limit frame generated by the rate-limit frame generation module carries the newest Ethernet bandwidth information.

9. The apparatus according to claim 6 or 7 or 8, wherein,
the rate-limit frame includes a destination address, a source address, length information, a port rate, a pad and a frame check sequence.

10. The apparatus according to claim 6 or 7 or 8, wherein,
the scheduling module is configured to transmit the received rate-limit frame, pause frame or resume frame in a following way:
inserting the received rate-limit frame, pause frame or resume frame in a received service flow, and transmitting the received service flow to the data transmitting end.
